# EUROPEAN PATENT APPLICATION

(11) **EP 1 758 422 A2**
(43) Date of publication of application: **28.02.2007**
(21) Application number: 06017785.4
(22) Date of filing: 25.08.2006
(51) Int. Cl.: H04Q 7/38

(54) **Method of recognizing frequency bandwidth of base station in a mobile communication system with frequency bandwidth scalability**

(30) Priority: 26.08.2005 KR 20050078850
(71) Applicant: Samsung Electronics Co., Ltd., Yeongtong-gu Suwon-si, Gyeonggi-do (KR)
(72) Inventor: Kim, Eung-Sun, Yeongtong-gu Suwon-si Gyeonggi-do (KR); You, Cheol-Woo, Yeongtong-gu Suwon-si Gyeonggi-do (KR); Kim, Yung-Soo, Yeongtong-gu Suwon-si Gyeonggi-do (KR); Kwun, Jong-Hyung, Yeongtong-gu Suwon-si Gyeonggi-do (KR)
(74) Representative: Grünecker, Kinkeldey, Stockmair & Schwanhäusser Anwaltssozietät

(57) **Abstract**

A method is provided for recognizing the frequency bandwidth of a base station in a mobile communication system with frequency bandwidth scalability where the transmission frequency bands of base stations and mobile stations having different frequency bandwidths are overlaid with one another. The base stations transmit to a mobile station first information, including information about their frequency bandwidths at the same frequency position over a minimum frequency bandwidth with the same center frequency. The mobile station recognizes the presence of the base stations by comparing the first information from the base stations and detects the frequency bandwidth information in the first information.

## Description

### BACKGROUND OF THE INVENTION

### 1. Field of the Invention

The present invention relates generally to a method of recognizing the frequency bandwidth of a Base Station (BS) in a mobile communication system with frequency bandwidth scalability, and in particular, to a method of recognizing the frequency bandwidth of a BS with which a Mobile Station (MS) communicates in a mobile communication system where the transmit (Tx) frequency bands of BSs and MSs, each having different frequency bandwidths, are overlaid with each other.

### 2. Description of the Related Art

In a mobile communication system, BSs and MSs communicate with frequency bands having predetermined bandwidths assigned from total frequency resources. The frequency bandwidths vary with the types of provided communication services. Therefore, there may exist a mobile communication system where BSs and MSs having different frequency bandwidths are coexistent.

Along with service development, the increase of the amount of transmitted data has accelerated the shortage of frequency resources. To fully utilize the limited resources, the Tx frequency bands of BSs and MSs are overlaid with each other.

A mobile communication system where communications can be conducted between BSs and MSs under the condition that their Tx frequency bands are overlaid with each other is called a mobile communication system with frequency bandwidth scalability. The mobile communication system with frequency bandwidth scalability can be operated in two ways. One of them is that BSs and MSs having relatively narrow frequency bandwidths use a single center frequency, fc.

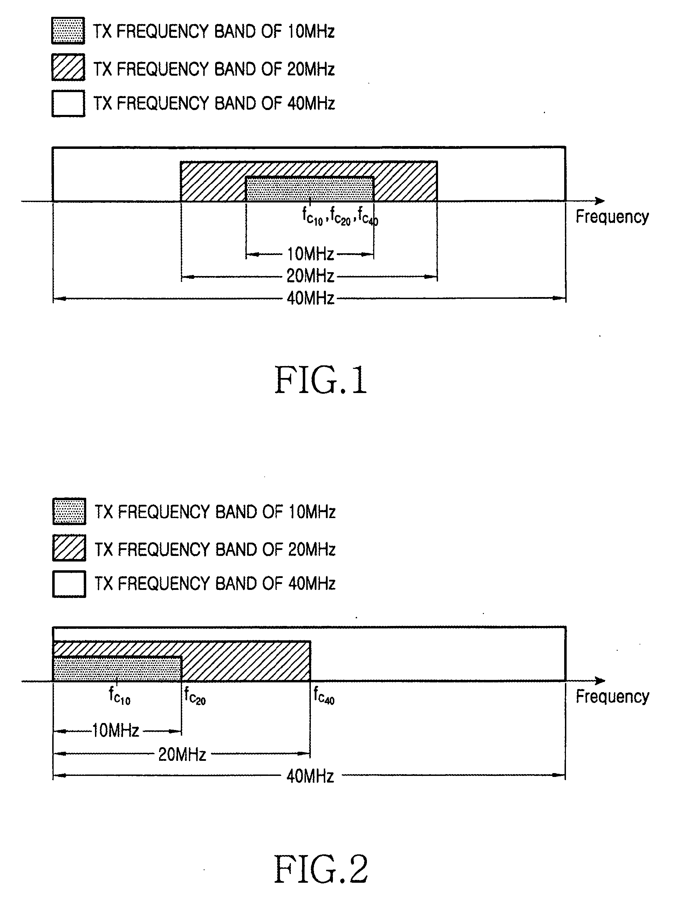

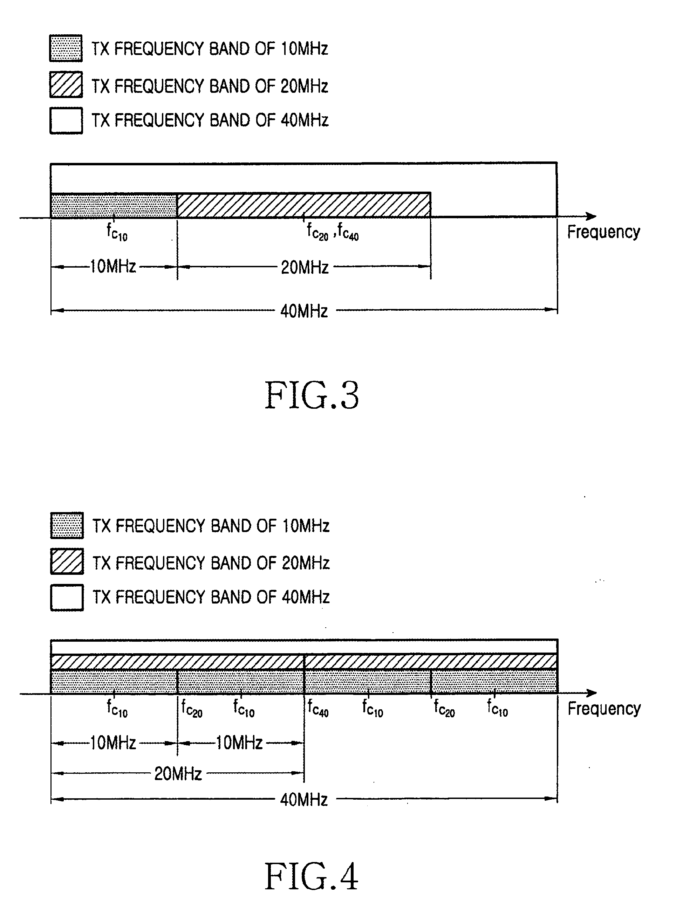

In FIGs. 1 to 4, f_{c10}, f_{c20} and f_{c40} denote the center frequencies of BSs and MSs having bandwidths of 10, 20 and 40MHz, respectively. As illustrated in FIG. 1 (operation example 1-1), BSs and MSs use the same center frequency. As illustrated in FIG. 2 (operation example 1-2), the BSs and the MSs may instead use different center frequencies, but in a predetermined rule. Or the BSs and MSs use the same or different center frequencies, but in a predetermined rule, as illustrated in FIG. 3 (operation example 1-3). To be more specific, referring to FIG. 2, all BSs and MSs use the same lowest frequency in their Tx frequency bands. In other words, the Tx frequency bands of all BSs and MSs start with the same frequency. Referring to FIG. 3, the Tx frequency bands of BSs and MSs having relatively narrow bandwidths are overlaid sequentially with those of BSs and MSs having relatively wide bandwidths, starting with the lowest frequency. That is, BSs and MSs having relatively narrow bandwidths use different center frequencies, and some of the BSs and MSs having relatively narrow bandwidths use the same center frequency as that of BSs and MSs having relatively wide bandwidths.

The other way of operating the mobile communication system with frequency bandwidth scalability is that BSs and MSs having relatively narrow bandwidths use a plurality of center frequencies.

As illustrated in FIG. 4 (operation example 2), the Tx frequency bands of BSs and MSs having relatively narrow bandwidths are overlaid over equal segments of that of BSs and MSs having a one-level wider bandwidth. The Tx frequency band of BSs having a bandwidth of 20MHz is overlaid with two Tx frequency bands of BSs having a bandwidth of 10MHz. Similarly, the Tx frequency band of BSs having a bandwidth of 40MHz is overlaid with two Tx frequency bands of BSs having a bandwidth of 20MHz.

As described above, the mobile communication system with frequency bandwidth scalability can operate in many ways. In this mobile communication system, an MS is connected to BSs, for communications, as it roams. For this purpose, the MS has to obtain knowledge of the frequency bandwidths of the BSs.

### SUMMARY OF THE INVENTION

An object of the present invention is to substantially solve at least the above problems and/or disadvantages and to provide at least the advantages below. Accordingly, the present invention provides a method of identifying a serving BS and recognizing the frequency bandwidth of the serving BS for an MS in a mobile communication system with frequency bandwidth scalability.

According to one aspect of the present invention, a method is provided for recognizing the frequency bandwidth of a base station in a mobile communication system with frequency bandwidth scalability where base stations and mobile stations can communicate in the case where the transmission frequency bands of base stations and mobile stations having different frequency bandwidths are overlaid with one another. Base stations transmit to a mobile station first information including information about their frequency bandwidths at the same frequency position with the same center frequency over a minimum frequency bandwidth. The mobile station recognizes the presence of the base stations by comparing the first information from the base stations and detects the frequency bandwidth information in the first information.

According to another aspect of the present invention, a method is provided for recognizing the frequency bandwidth of a base station in a mobile communication system with frequency bandwidth scalability where base stations and mobile stations can communicate in the case where the transmission frequency bands of base stations and mobile stations having different frequency bandwidths are overlaid with one another. Base stations transmit to a mobile station first information including information about the presence of the base stations at the same frequency position with the same center frequency over a minimum frequency bandwidth. The base stations also transmit to the mobile station second information including information about the frequency bandwidths of base stations at the same frequency position with the same center frequency over the minimum frequency bandwidth as the first information for a predetermined time stating from the end of transmission of the first information. The mobile station recognizes the presence of the base stations by comparing the first information from the base stations and detects the frequency bandwidth information in the second information.

According to a further aspect of the present invention, a method is provided for recognizing the frequency bandwidth of a base station in a mobile communication system with frequency bandwidth scalability where base stations and mobile stations can communicate in the case where the transmission frequency bands of base stations and mobile stations having different frequency bandwidths are overlaid with one another. Base stations transmit to a mobile station first information including information about different frequency bandwidths of base stations in the transmission frequency bands of the base stations for a predetermined time starting from the start of a transmission data frame on a time axis. The mobile station recognizes the presence of the base stations by comparing the first information from the base stations and detects the frequency bandwidth information in the first information.

### BRIEF DESCRIPTION OF THE DRAWINGS

The above and other objects, features and advantages of the present invention will become more apparent from the following detailed description when taken in conjunction with the accompanying drawings in which:
FIGs. 1 to 4 illustrate exemplary ways in which a mobile communication system with frequency bandwidth scalability can operate;
FIG. 5 illustrates an embodiment of the present invention;
FIG. 6 illustrates another embodiment of the present invention;
FIG. 7 illustrates a third embodiment of the present invention;
FIG. 8 illustrates a fourth embodiment of the present invention;
FIG. 9 illustrates a fifth embodiment of the present invention;
FIG. 10 illustrates a sixth embodiment of the present invention;
FIG. 11 illustrates a seventh embodiment of the present invention; and
FIG. 12 illustrates an eighth embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

In accordance with the present invention, a BS transmits predetermined information to an MS so that the MS can recognize the frequency bandwidth of the BS in a mobile communication system with frequency bandwidth scalability. The predetermined information is carried for a predetermined time period, divided into Zone A and Zone B in the Tx frequency band of the BS. Zone A carries a preamble and Zone B carries a control message, like system parameters.

Zone A and Zone B can be transmitted in three methods. In method 1, BSs with different frequency bandwidths transmit Zone A with the same minimum frequency bandwidth at the same frequency. Thus the MS can recognize the presence of the BSs and their frequency bandwidths by use of information of Zone A only. For method 2, BSs with different frequency bandwidths transmit Zone A and Zone B with the same minimum frequency bandwidth at the same frequency. Thus the MS can recognize the presence of the BSs with information of Zone A and their frequency bandwidths with information of Zone B. With method 3, BSs with different frequency bandwidths transmit Zone A over their respective Tx frequency bands. Thus the MS can recognize the presence of the BSs and their frequency bandwidths by use of information of Zone A only.

The way in which the three methods of transmitting Zone A and Zone B are applied according to the operation of the mobile communication system with frequency bandwidth scalability will be described below in detail.

Method 1 can be applied to operation example 1-1 in which BSs and MSs use the same center frequency, as illustrated in FIG. 1 and operation example 1-2 in which BSs and MSs use different center frequencies but in a predetermined rule, as illustrated in FIG. 2.

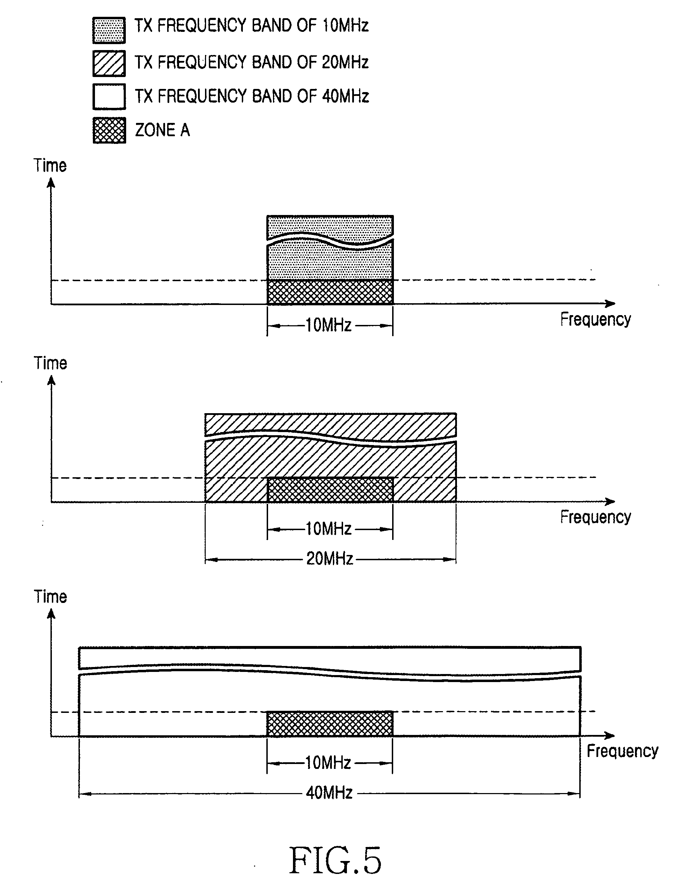

FIG. 5 illustrates application of method 1 to operation example 1-1, according to an embodiment of the present invention. Referring to FIG. 5, BSs use different frequency bandwidths, 10MHz, 20MHz and 40MHz. The Tx frequency bands of the BSs are overlaid with one another such that they have the same center frequency.

Irrespective of their Tx frequency bands, the BSs transmit Zone A in the same minimum frequency bandwidth 10MHz, with the same center frequency at the same position for a predetermined time period starting from the start of a transmission data frame.

An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the following two ways.

One of them is that when a preamble is transmitted in Zone A, available preamble types are used for each of available frequency bandwidths. If three frequency bandwidths BW1, BW2 and BW3 exist and x preamble types are available, 3 × x preambles are provided. These preambles are grouped into Group-BW1, Group-BW2, and Group-BW3 according to the frequency bandwidths. A BS uses a preamble from a preamble group corresponding to its frequency bandwidth. Thus the MS can recognize the frequency bandwidth of the BS directly using the preamble of Zone A.

The other way of including the frequency bandwidth information in Zone A is that when a preamble is transmitted in Zone A, BSs having a particular frequency bandwidth use one of available preambles, and BSs having a different frequency bandwidth use a preamble created by shifting the preamble by a predetermined time. Given three frequency bandwidths BW1, BW2 and BW3, x preamble types available for BSs having BW1, and a set of the x preamble types being P={p1, p2, ..., px}, P_shift_1 and P_shift_2 are produced using P and used for BSs having BW2 and BSs having BW3, respectively. P_shift_1 and P_shift_2 are preamble sets which are shifted from the preambles of P by s 1 and s2 on a time axis.

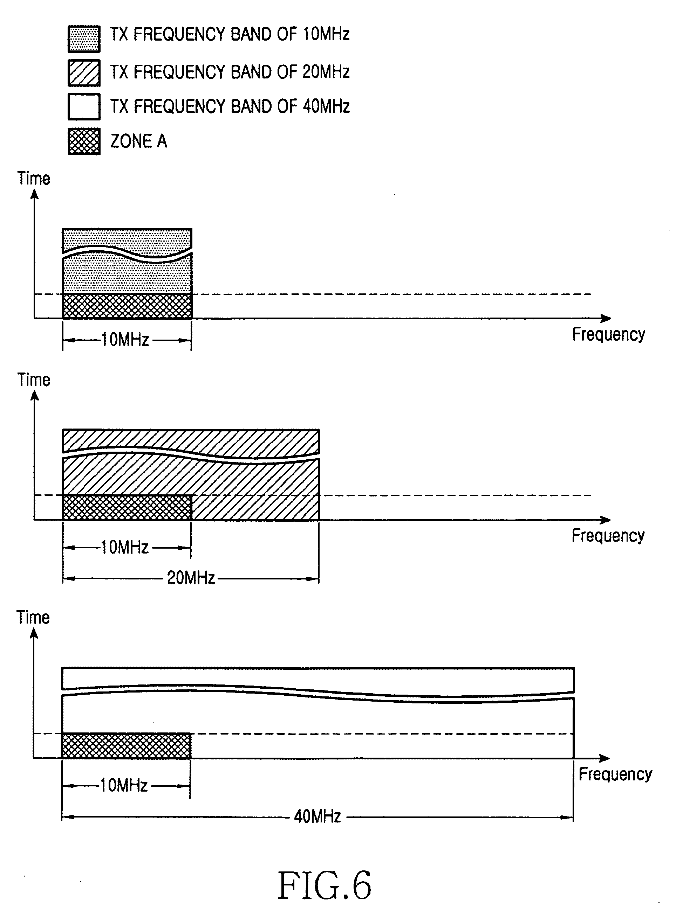

FIG. 6 illustrates application of method 1 to operation example 1-2, illustrated in FIG. 2, according to another embodiment of the present invention. Referring to FIG. 6, BSs use different frequency bandwidths, 10MHz, 20MHz and 40MHz. The Tx frequency bands of the BSs have the same lowest frequency. That is, the Tx frequency bands of the BSs are overlaid with one another, starting from the same frequency.

Irrespective of their Tx frequency bands, the BSs transmit Zone A in the same minimum frequency bandwidth 10MHz, with the same center frequency at the same position for a predetermined time period starting from the start of a transmission data frame.

An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the above-described two ways.

Like method 1, method 2 is applicable to operation example 1-1 illustrated in FIG. 1 in which BSs and MSs use the same center frequency and operation example 1-2 illustrated in FIG. 2 in which BSs and MSs use different center frequencies but according to a predetermined rule. As described before, in method 2, BSs having different frequency bandwidths transmit Zone A and Zone B with the same minimum frequency bandwidth at the same frequency position, an MS recognizes the presence of the BSs with information of Zone A and the frequency bandwidths of the BSs with information of Zone B.

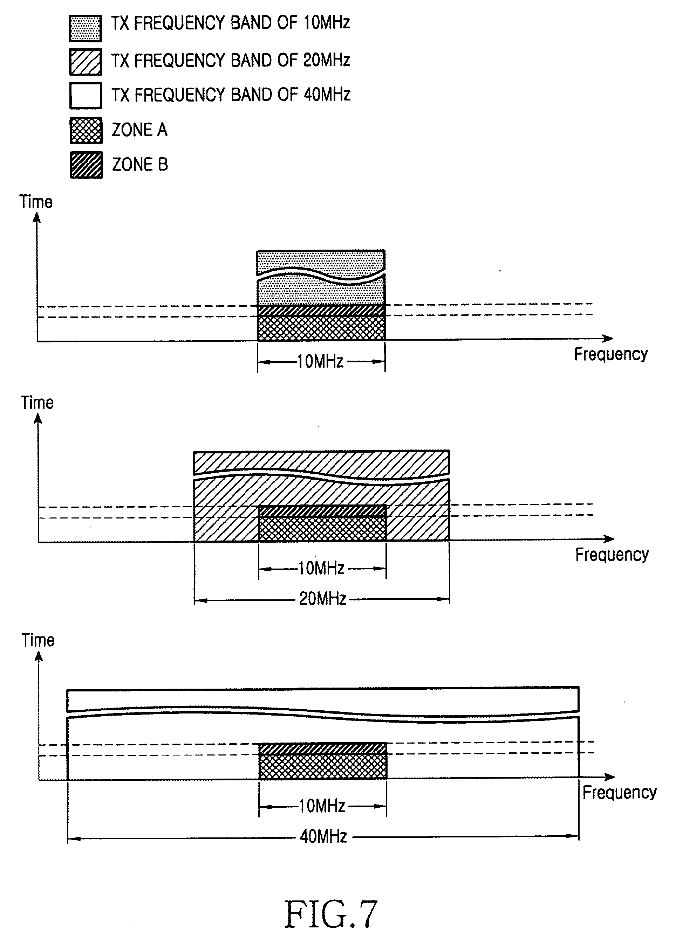

FIG. 7 illustrates application of method 2 to operation example 1-1, according to a third embodiment of the present invention. Referring to FIG. 7, BSs use different frequency bandwidths, 10MHz, 20MHz and 40MHz. The Tx frequency bands of the BSs are overlaid with one another such that they have the same center frequency.

Irrespective of their Tx frequency bands, the BSs transmit Zone A in the same minimum frequency bandwidth 10MHz, with the same center frequency at the same position for a predetermined time period starting from the start of a transmission data frame.

The BSs also transmit Zone B in the same minimum frequency bandwidth 10MHz as that of Zone A, with the same center frequency at the same position for a predetermined time period starting from the end of Zone A.

An MS, upon receipt of Zone A, recognizes the presence of the BSs by comparing their Zone A. The comparison can be correlation, for example. The MS then recognizes the frequency bandwidths of the BSs based on information set in Zone B. Zone A can include a preamble and each of different BSs can use one of available preambles. Zone B carries information about the frequency bandwidth of a BS.

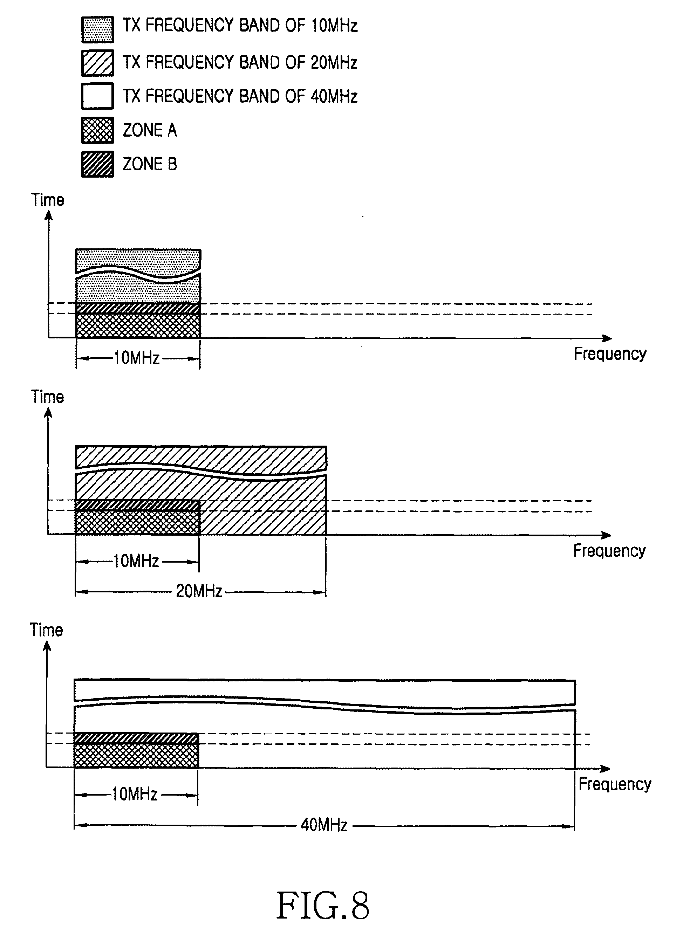

FIG. 8 illustrates application of method 1 to operation example 1-2, illustrated in FIG. 2, according to a fourth embodiment of the present invention. Referring to FIG. 8, BSs use different frequency bandwidths, 10MHz, 20MHz and 40MHz. The Tx frequency bands of the BSs have the same lowest frequency. That is, the Tx frequency bands of the BSs are overlaid with one another, starting from the same frequency.

Irrespective of their Tx frequency bands, the BSs transmit Zone A in the same minimum frequency bandwidth 10MHz, with the same center frequency at the same position for a predetermined time period starting from the start of a transmission data frame. The BSs also transmit Zone B in the same minimum frequency bandwidth 10MHz as that of Zone A with the same center frequency at the same position for a predetermined time period starting from the end of Zone A.

An MS, upon receipt of Zone A, recognizes the presence of the BSs by comparing their Zone A. The comparison can be correlation, for example. The MS then recognizes the frequency bandwidths of the BSs based on information set in Zone B. Zone A can include a preamble and each of different BSs can use one of available preambles. Zone B carries information about the frequency bandwidth of a BS.

Method 3 is applicable to operation example 1-1 illustrated in FIG. 1 in which BSs and MSs use the same center frequency; operation example 1-2 illustrated in FIG. 2 in which BSs and MSs use different center frequencies but according to a predetermined rule; operation example 1-3 illustrated in FIG. 3 in which BSs and MSs use the same or different center frequencies, but according to a predetermined rule; and operation example 2 illustrated in FIG. 4 in which the Tx frequency bands of BSs and MSs having a relatively narrow frequency bandwidth are equal segments of the Tx frequency band of BSs and MSs having a one-level wider frequency bandwidth. As described before, in method 3, BSs having different frequency bandwidths transmit Zone A over their total Tx frequency bands and an MS recognizes the presence and frequency bandwidths of the BSs.

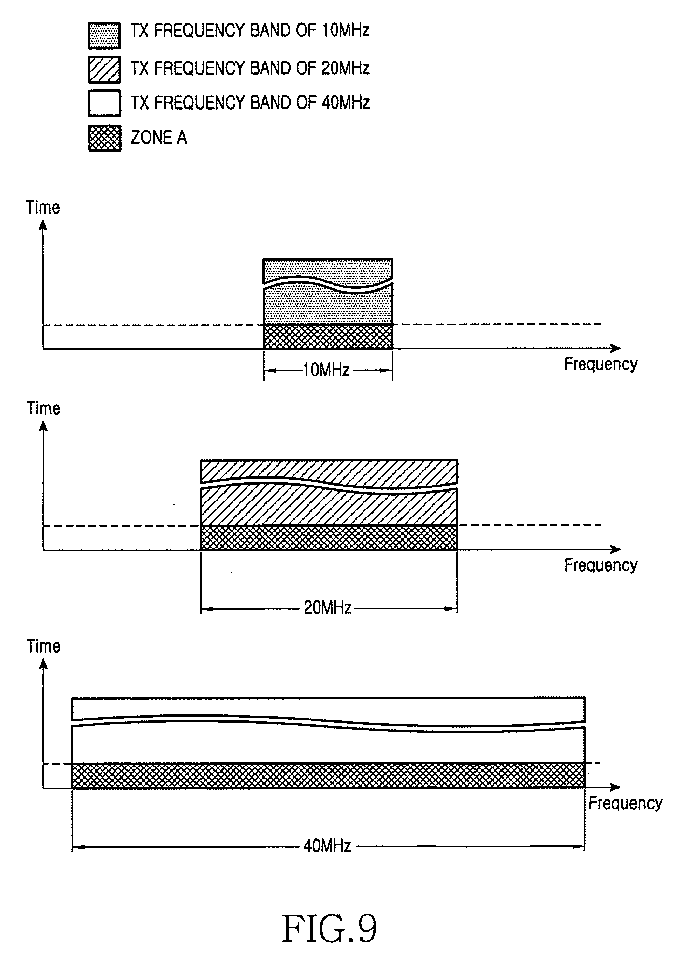

FIG. 9 illustrates application of method 3 to operation example 1-1, according to a fifth embodiment of the present invention. Referring to FIG. 9, BSs use different frequency bandwidths, 10MHz, 20MHz and 40MHz. The Tx frequency bands of the BSs are overlaid with one another such that they have the same center frequency. The BSs transmit Zone A over their entire Tx frequency bands for a predetermined time period starting from the start of a transmission data frame.

An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the following way.

When a preamble is transmitted in Zone A, available preamble types are used for each of available frequency bandwidths. If three frequency bandwidths BW1, BW2 and BW3 exist and x preamble types are available, 3× x preambles are provided. These preambles are grouped into Group-BW1, Group-BW2, and Group-BW3, according to the frequency bandwidths. A BS uses a preamble froma preamble group corresponding to its frequency bandwidth. Thus the MS can recognize the frequency bandwidth of the BS directly using the preamble of Zone A. Especially, since the MS has knowledge of the correlation power offsets of the preambles in each frequency bandwidth group, it can identify the frequency bandwidth of the BS according to the correlation power offsets.

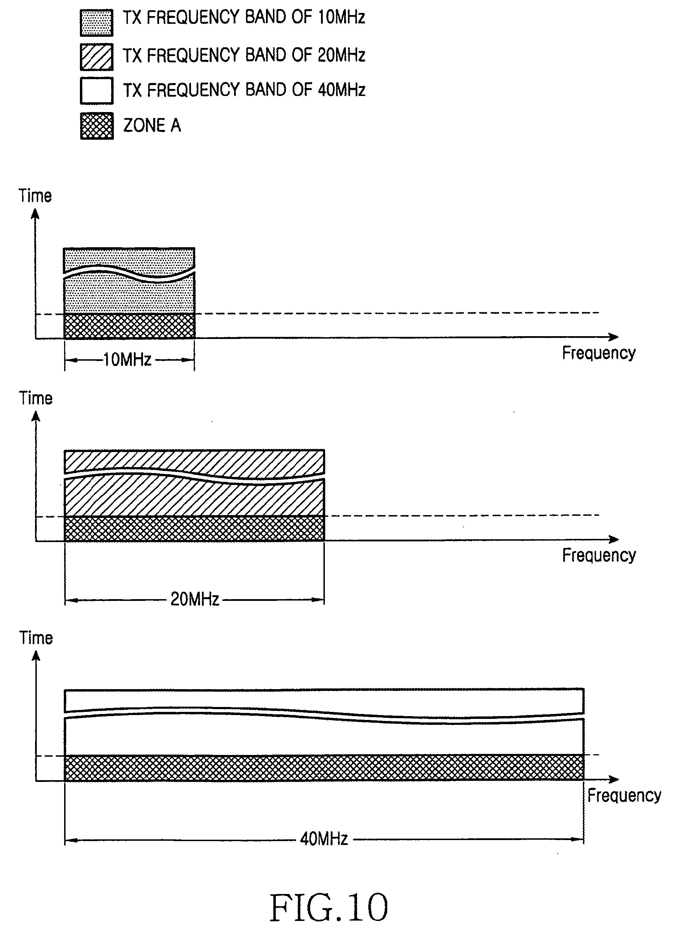

FIG. 10 illustrates application of method 3 to operation example 1-2, illustrated in FIG. 2, according to a sixth embodiment of the present invention. Referring to FIG. 10, BSs use different frequency bandwidths, 10MHz, 20MHz and 40MHz. The Tx frequency bands of the BSs have the same lowest frequency. That is, the Tx frequency bands of the BSs are overlaid with one another, starting from the same frequency.

The BSs transmit Zone A over their entire Tx frequency bands for a predetermined time period starting from the start of a transmission data frame. An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the following way.

When a preamble is transmitted in Zone A, available preamble types are used for each of available frequency bandwidths. If three frequency bandwidths BW1, BW2 and BW3 exist and x preamble types are available, 3 × x preambles are provided. These preambles are grouped into Group-BW1, Group-BW2, and Group-BW3, according to the frequency bandwidths. A BS uses a preamble from a preamble group corresponding to its frequency bandwidth. Thus the MS can recognize the frequency bandwidth of the BS directly using the preamble of Zone A. Especially, since the MS has knowledge of the correlation power offsets of the preambles in each frequency bandwidth group, it can identify the frequency bandwidth of the BS according to the correlation power offsets.

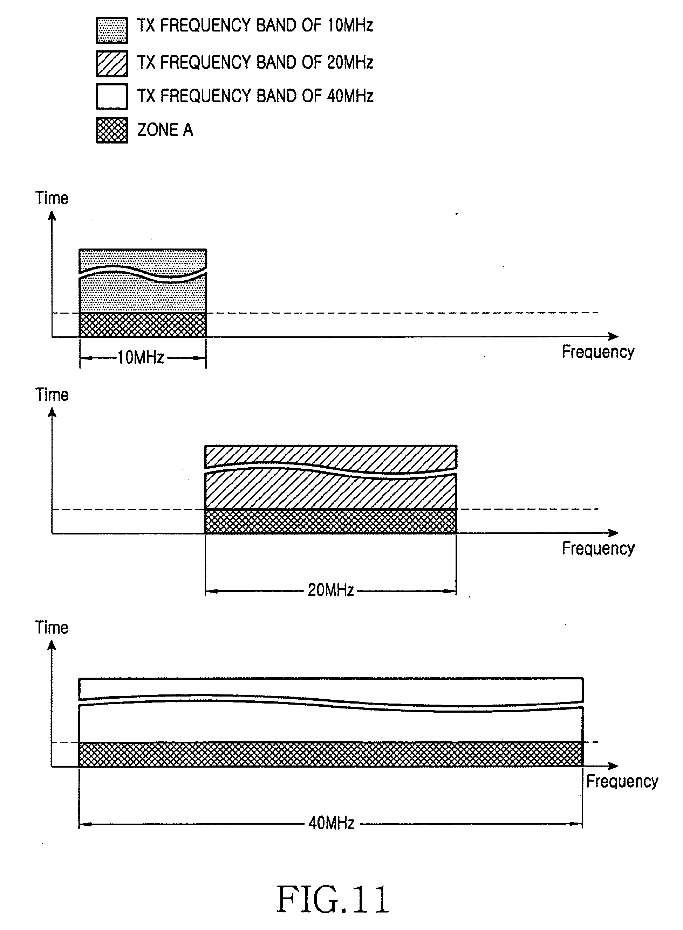

FIG. 11 illustrates application of method 3 to operation example 1-3, illustrated in FIG. 3, according to a seventh embodiment of the present invention. Referring to FIG. 11, the Tx frequency bands of BSs and MSs with relatively narrow frequency bandwidths are overlaid over the Tx frequency band of BSs and MSs with a relatively wide frequency bandwidth, sequentially starting from the lowest frequency. To be more specific, BSs use different frequency bandwidths, 10MHz, 20MHz and 40MHz. The frequency band of the BSs having 10MHz is overlaid with that of the BSs having 40MHz over a 10MHz bandwidth of the 40MHz-bandwidth, starting from the lowest frequency, and the frequency band of the BSs having 20MHz is overlaid with that of the BSs having 40MHz over a 20MHz bandwidth of the 40MHz-bandwidth, starting from the end of the previous 10MHz. Therefore, the center frequency of the BSs having 40MHz is different from that of the BSs having 10MHz and identical to that of the BSs having 20MHz.

The BSs transmit Zone A over their entire Tx frequency bands for a predetermined time period starting from the start of a transmission data frame. An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the following way.

When a preamble is transmitted in Zone A, available preamble types are used for each of available frequency bandwidths. If three frequency bandwidths BW1, BW2 and BW3 exist and x preamble types are available, 3xx preambles are provided. These preambles are grouped into Group-BW1, Group-BW2, and Group-BW3, according to the frequency bandwidths. A BS uses a preamble from a preamble group corresponding to its frequency bandwidth. Thus the MS can recognize the frequency bandwidth of the BS directly using the preamble of Zone A.

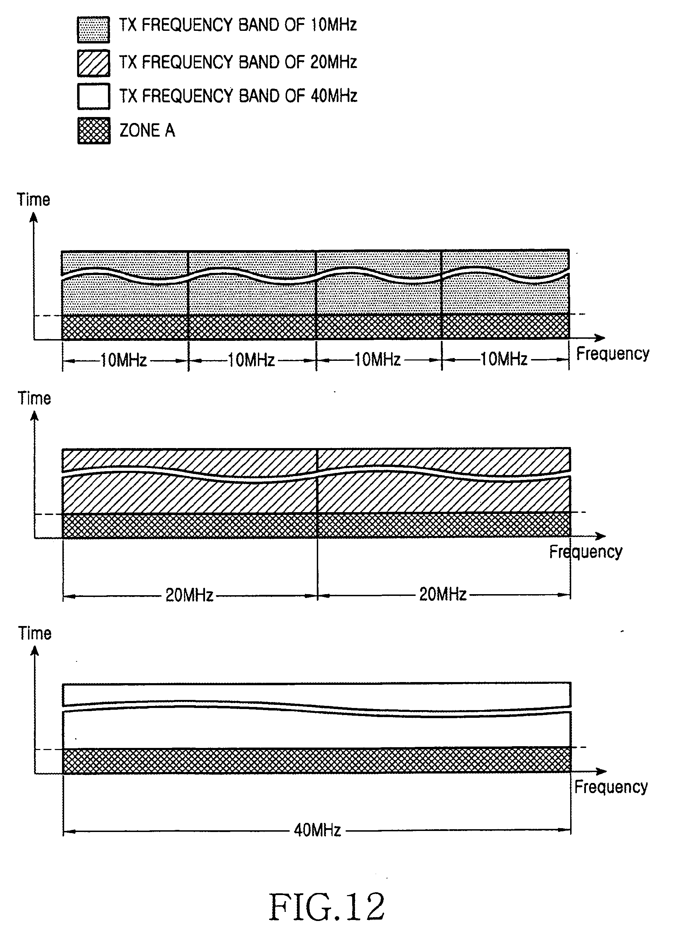

FIG. 12 illustrates application of method 3 to operation example 2, illustrated in FIG. 4, according to an eighth embodiment of the present invention.

Referring to FIG. 12, the Tx frequency bands of BSs and MSs having a relatively narrow frequency bandwidth are equal segments of the Tx frequency band of BSs and MSs having a one-level wider frequency bandwidth. The Tx frequency band of BSs having 20MHz is overlaid with two Tx frequency bands of BSs having 10MHz. Similarly, the Tx frequency band of BSs having 40MHz is overlaid with two Tx frequency bands of the BSs having 20MHz.

The BSs transmit Zone A over their entire Tx frequency bands for a predetermined time period starting from the start of a transmission data frame. An MS, upon receipt of Zone A, recognizes the presence of the BSs by comparing their Zone A. The comparison can be correlation, for example. The MS then recognizes the frequency bandwidths of the BSs based on information set in Zone A. Information about frequency bandwidth can be set in Zone A in the following way.

When a preamble is transmitted in Zone A, available preamble types are used for each of available frequency bandwidths. If three frequency bandwidths BW1, BW2 and BW3 exist and x preamble types are available, 3 × x preambles are provided. These preambles are grouped into Group-BW1, Group-BW2, and Group-BW3, according to the frequency bandwidths. A BS uses a preamble from a preamble group corresponding to its frequency bandwidth. Thus the MS can recognize the frequency bandwidth of the BS directly using the preamble of Zone A.

As described above, the present invention advantageously enables an MS to identify a BS with which it communicates and recognize the frequency bandwidth of the BS in a mobile communication system with frequency bandwidth scalability. Therefore, the frequency resources of the mobile communication system are more efficiently utilized.

While the invention has been shown and described with reference to certain preferred embodiments thereof, it will be understood by those skilled in the art that various changes in form and details may be made therein without departing from the spirit and scope of the invention as defmed by the appended claims.

## Claims

1. A method of recognizing a frequency bandwidth of a base station in a mobile communication system with frequency bandwidth scalability where base stations and mobile stations can communicate where transmission frequency bands of base stations and mobile stations having different frequency bandwidths are overlaid with one another, the method comprising the steps of:
transmitting to a mobile station, by the base stations, first information including information about different frequency bandwidths of base stations at the same frequency position with the same center frequency over a minimum frequency bandwidth;
recognizing the presence of the base stations by comparing the first information from the base stations by the mobile station; and
detecting the frequency bandwidth information in the first information by the mobile station.

2. The method of claim 1, wherein the first information transmitting step comprises transmitting the first information for a predetermined time period starting from a start of a transmission data frame on a time axis.

3. The method of claim 1, wherein the first information transmitting step comprises selecting one of a plurality of preambles available for the frequency bandwidth of each of the base stations having preambles for each frequency bandwidth and transmitting the selected preamble in the first information by the each base station, and the detecting step comprises detecting the frequency bandwidth of the each base station using the preamble by the mobile station.

4. The method of claim 3, wherein the transmission frequency bands of the base stations are overlaid with one another so as to have the same center frequency band, irrespective of the frequency bandwidths.

5. The method of claim 3, wherein the transmission frequency bands of the base stations are overlaid with one another over the frequency bandwidth of each base station, starting from the same frequency.

6. The method of claim 1, wherein base stations having a predetermined frequency bandwidth among the base stations have a set of available preambles and base stations having a frequency bandwidths different from the predetermined frequency bandwidth use a set of preambles shifted from the available preambles by a predetermined time, wherein the first information transmitting step comprises selecting one of preambles corresponding to the frequency bandwidth of each of the base stations and transmitting the selected preamble in the first information by the each base station, and the frequency bandwidth detecting step comprises detecting the frequency bandwidth of the each base station using the preamble by the mobile station.

7. The method of claim 6, wherein the transmission frequency bands of the base stations are overlaid with one another so as to have the same center frequency band irrespective of the frequency bandwidths.

8. The method of claim 6, wherein the transmission frequency bands of the base stations are overlaid with one another over the frequency bandwidth of each base station, starting from the same frequency.

9. A method of recognizing a frequency bandwidth of a base station in a mobile communication system with frequency bandwidth scalability where base stations and mobile stations can communicate where transmission frequency bands of base stations and mobile stations having different frequency bandwidths are overlaid with one another, the method comprising the steps of:
transmitting to a mobile station, by the base stations, first information including information about the presence of the base stations at the same frequency position with the same center frequency over a minimum frequency bandwidth;
transmitting to the mobile station, by the base stations, second information including information about the frequency bandwidths of the base stations at the same frequency position with the same center frequency over the minimum frequency bandwidth as the first information for a predetermined time stating from the end of transmission of the first information;
recognizing the presence of the base stations by comparing the first information from the base stations by the mobile station; and
detecting the frequency bandwidth information in the second information by the mobile station.

10. The method of claim 9, wherein the first information transmitting step comprises transmitting the first information for a predetermined time period starting from a start of a transmission data frame on a time axis.

11. The method of claim 9, wherein the first information includes a preamble and each of the base stations uses one of available preambles.

12. The method of claim 9, wherein the second information is a control message carrying a system parameter, including the information about the frequency bandwidth of a base station that transmits the second information.

13. The method of claim 9, wherein the transmission frequency bands of the base stations are overlaid with one another so as to have the same center frequency band irrespective of the frequency bandwidths.

14. The method of claim 9, wherein the transmission frequency bands of the base stations are overlaid with one another over the frequency bandwidth of each base station, starting from the same frequency.

15. A method of recognizing a frequency bandwidth of a base station in a mobile communication system with frequency bandwidth scalability where base stations and mobile stations can communicate in the case where the transmission frequency bands of base stations and mobile stations having different frequency bandwidths are overlaid with one another, the method comprising the steps of:
transmitting to a mobile station, by the base stations, first information including information about different frequency bandwidths of the base stations in the transmission frequency bands of the base stations for a predetermined time starting from the start of a transmission data frame on a time axis;
recognizing the presence of the base stations by comparing the first information from the base stations by the mobile station; and
detecting the frequency bandwidth information in the first information by the mobile station.

16. The method of claim 15, wherein the first information transmitting step comprises selecting one of a plurality of preambles available for the frequency bandwidth of each of the base stations having preambles for each frequency bandwidth and transmitting the selected preamble in the first information by the each base station, and the detecting step comprises detecting the frequency bandwidth of the each base station using the preamble by the mobile station.

17. The method of claim 16, wherein the transmission frequency bands of the base stations are overlaid with one another so as to have the same center frequency band, irrespective of the frequency bandwidths.

18. The method of claim 16, wherein the transmission frequency bands of the base stations are overlaid with one another over the frequency bandwidth of each base station, starting from the same frequency.

19. The method of claim 16, wherein the transmission frequency bands of base stations having relatively narrow frequency bandwidths are overlaid over the frequency band of base station having a relatively wide frequency band, starting from the lowest frequency in the order of frequency bandwidth.

20. The method of claim 16, wherein the transmission frequency bands of base stations having a relatively narrow frequency bandwidth are overlaid over equal segments of the frequency band of base station having a relatively wide frequency band.
